# EUROPÄISCHE PATENTSCHRIFT

(11) **EP 1 994 366 B1**
(45) Veröffentlichungstag und Bekanntmachung des Hinweises auf die Patenterteilung: **03.10.2012**
(21) Anmeldenummer: 07712099.6
(22) Anmeldetag: 25.01.2007
(51) Int. Cl.: G01C 21/36

(54) **VERFAHREN UND ANORDNUNG ZUR ANZEIGE VON NAVIGATIONSHINWEISEN**
METHOD AND SYSTEM FOR DISPLAYING NAVIGATION INSTRUCTIONS
PROCÉDÉ ET SYSTÈME POUR AFFICHER DES INDICATIONS DE NAVIGATION

(30) Priorität: 07.03.2006 DE 102006010481
(43) Veröffentlichungstag der Anmeldung: 26.11.2008
(73) Patentinhaber: Robert Bosch GmbH, 70442 Stuttgart (DE)
(72) Erfinder: MUELLER, Mario, 30519 Hannover (DE)
(86) Internationale Anmeldenummer: PCT/EP2007/050712
(87) Internationale Veröffentlichungsnummer: WO 2007/101744

(56) Entgegenhaltungen:
- EP-A- 1 521 059
- DE-A1- 10 138 719
- JP-A- 11 023 305
- JP-A- 2006 162 442

## Beschreibung

### Stand der Technik

Die Erfindung betrifft ein Verfahren zur Anzeige mindestens eines von einem Navigationssystem eines Fahrzeugs gelieferten Navigationshinweises, wobei ein Ausschnitt der Fahrzeugumgebung von einer Kamera aufgenommen und von einer Anzeigeeinheit als Umgebungsbild angezeigt wird, und wobei der in Abhängigkeit einer Fahizielposition und der aktuellen Position des Fahrzeugs ermittelte Navigationshinweis ebenfalls von der Anzeigeeinheit angezeigt wird. Die Erfindung betrifft ferner eine Anordnung mit der ein derartiges Verfahren durchführbar ist.

Zur Unterstützung der Fahrer von Kraftfahrzeugen ist es bekannt, videobasierte Fahrerassistenzsysteme einzusetzen, die in einem Display von einer Kamera aufgenommene Bilder anzeigen. Auf diese Weise kann der Fahrer zum Beispiel mit einem Rückfahrkamerasystem bei einem rückwärts ausgeführten Einparkvorgang in der Erkennung von Parklückenbegrenzungen oder Hindernissen unterstützt werden. Durch den Einsatz von infrarotempfindlichen Bildsensoren, beispielsweise gemäß der WO 2004/047449 A1, kann der Fahrer im Rahmen sogenannter Nightview-Systeme auch bei schlechten Sichtverhältnissen oder Wetterbedingungen wirkungsvoll unterstützt werden. Auch aus der WO 2003/064213 A1 ist ein "automobiles Infrarot-Nachtsichtgerät" bekannt, das ein aufbereitetes Kamerabild des vor dem Fahrer liegenden Bereichs selektiv anzeigt.

Um den Fahrer bei derartigen Assistenzsystemen noch weiter zu unterstützen ist es ebenfalls bekannt, zusätzliche Informationen zu erzeugen oder abzurufen und diese ergänzend in die von der Bildsensoreinheit aufgenommenen und in der Anzeigeeinheit dargestellten Bilder einzuzeichnen. So können beispielsweise bei einem Nightview-System mit integrierter Fahrspurerkennung die Fahrspur des Fahrzeugs oder bei einem Rückfahrkamerasystem Hilfslinien zur Erleichterung des Einparkvorgangs als zusätzliche Informationen ebenfalls in der Anzeigeeinheit optisch dargestellt werden. Auch können Symbole oder Texte als Zusatzinformationen erzeugt und angezeigt werden. Dabei werden stets künstlich erzeugte graphische Daten gleichzeitig mit den aufgenommenen Bildern der reellen Umgebung des Fahrzeugs in einer Anzeigeeinheit dargestellt. Als Anzeigeeinheit kann vorzugsweise ein Display oder Monitor dienen.

Ein Verfahren der eingangsgenannten Art und eine entsprechende Anordnung ist aus der DE 101 38 719 A1 bekannt. Dabei werden Navigationshinweise in die von einer Fahrzeugkamera aufgenommenen und in der Anzeigeeinheit dargestellten Bilder der Fahrzeugumgebung eingeblendet. Auch wird dort gelehrt, die Fahrzeugneigung in der Längs- und Querachse bei der Anzeigenerstellung zu berücksichtigen.

Weiterhin ist es aus der gattungsbildenden JP 11023305 A1 bekannt, dass Hindernisse, die etwa in Form von stehenden oder sich bewegenden Objekten, beispielsweise als Fremdfahrzeuge vorliegen können, statt von den eingeblendeten Navigationshinweisen verdeckt, von entsprechend positionierten Navigationshinweisen unverdeckt angezeigt werden können.

Ferner stellen auch die JP 09325042 A1 und die JP 2004257979 A1 Verfahren vor, bei denen Navigationshinweise in einer Anzeigeeinheit angezeigt werden, wobei die Distanz von Fahrzeugposition und Zielposition jeweils besonders für die Anzeigenerstellung berücksichtigt wird.

So ist es aus der JP 09325042 A1 beispielsweise bekannt, Navigationspfeile in ein von einer Videokamera aufgenommenes Bild einzublenden, wobei Abbiegepfeile in ihrer Länge an die Entfernung bis zum Abbiegepunkt angepasst werden.

Die JP 2004257979 A1 offenbart, dass Abbiegehinweise dann in ein von einer Kamera aufgenommenes Bild eingeblendet werden, wenn die Entfernung der aktuellen Fahrzeugposition zum Abbiegepunkt kleiner oder gleich einem bestimmten Wert ist.

In Anzeigen eingeblendete Navigationshinweise dienen allgemein dazu, den Fahrer in komplizierten Verkchrssituationen zu entlasten und ihm generell zu einer verbesserten Orientierung zu verhelfen. Besonders deutlich zeigen sich die Vorteile von Navigationshinweisen bei dicht aufeinanderfolgenden Seitenstraßen im schnell fließenden Verkehr.

Die Anzeigeeinheit in Form eines im Navigationsgerät integrierten Displays oder eines separaten meist kleineren im Fahrzeugcockpit angeordneten Displays stellt üblicherweise Navigationshinweise in Form von Pfeilen, Straßennamen oder Entfernungen dar.

Obwohl aus dem vorgenannten Stand der Technik, insbesondere aus der DE 101 38 719 A1 bekannt ist, die eingeblendeten Navigationshinweise an das von der Kamera aufgenommene Bild anzupassen, indem das Bild des Navigationshinweises einem Originalbild der Kamera bzw. der Anzeige überlagert wird (Overlay), und dadurch eine gewisse Transparenz des Navigationshinweises erreicht werden kann, ist es dennoch für den Fahrer unbefriedigend, nicht den vollen Sichtkontakt auf relevante Straßenobjekte wie etwa den Fahrbahnrand, Fremdfahrzeuge, Straßenverkehrszeichen, Fußgänger oder Radfahrer zu erhalten. Insbesondere bei schlechten Sichtverhältnissen, etwa bei Nacht oder im Nebel, bei denen die Kamera das infrarotspektrum der Umgebung aufnimmt, können auch transparent gehaltene Navigationshinweise zu einer verminderten Orientierung oder zu einer gefährlichen Fehleinschätzung der Verkehrssituation führen. Im besten Fall macht der Fahrer von der Orientienungshilfe, die das Navigationsgerät bietet, zu wenig Gebrauch und verfährt sich entsprechend häufig.

Die der vorliegenden Erfindung zugrundeHegende Problematik besteht also allgemein darin, ein verbessertes Verfahren sowie eine verbesserte Anordnung vorzuschlagen, das bzw. die es dem Fahrer ermöglicht, sich gefahrfrei auf die angezeigten Navigationshinweise und gleichzeitig auch auf die weiteren Objekte des Straßenverkehrs zu konzentrieren, um so eine allgemein verbesserte Orientierung des Benutzers im Straßenverkehr zu erreichen.

### Vorteile der Erfindung

Das erfindungsgemäße Verfahren gemäß Anspruch 1 weist gegenüber den bekannten Verfahren und Systemen den Vorteil auf, dass der Fahrer optimal unterstützt wird, da sowohl Verdeckungen als auch transparent Überlagerungen von relevanten Objekten durch Navigationshinweise im Bild der Fahtzeugumgebung vermieden werden. Dies führt ebenso wie bei der erfindungsgemäßen Anordnung gemäß Anspruch 8 bei größtmöglichem Informationsgehalt zu einem Gewinn an Sicherheit.

Die der vorliegenden Erfindung zugrundeliegende Idee besteht darin, dass bei sich relativ zum Fahrzeug und/oder relativ zur Fahrzeugumgebung bewegenden Objekten, die erkannt und im Umgebungsbild als Objektbild bzw. Objektbilder angezeigt werden, der mindestens eine Navigationshinweis in seiner Position und/oder Größe und/oder Form derart innerhalb des angezeigten Umgebungsbilds positioniert und/oder verschoben und/oder verändert wird, dass keine Überschneidung zwischen dem mindestens einen Navigationshinweis einerseits und dem Objektbild bzw. den Objektbildern andererseits vorhanden ist.

Bei einer entsprechenden Anordnung gemäß des Oberbegriffs von Anspruch 8 ist vorgesehen, dass bei einem sich relativ zum Fahrzeug und/oder relativ zur Fahrzeugumgebung bewegenden Objekt, das mittels einer Objekterkennungseinrichtung erkannt und in dem mittels der Anzeigeeinheit dargestellten Umgebungsbild als Objektbild angezeigt wird, der Navigationshinweis von der Anzeigeeinheit in seiner von der Anordnung errechneten Position und/oder Größe und/oder Form derart angeordnet und/oder verschoben und/oder derart verändert wird, dass zwischen dem Objektbild und dem Navigationshinweis stets ein Abstand ist.

Bei dem erfindungsgemäßen Verfahren bzw. bei der entsprechenden Anordnung wird ein Objekt oder mehrere Objekte zunächst mittels einer geeigneten Objekterkennungseinrichtung, etwa in Form eines Nah- oder Fernbereichsradars unter Ausnutzung des Doppler-Effektes, erkannt. Andere Sensorik ist bekanntermaßen ebenfalls dazu geeignet. Die Objekterkennungseinrichtung kann auch zur Kamera oder zu anderen Komponenten der Anordnung oder des Navigationssystems gehörende Hardware sein, die mit einer Objekterkennungssoftware ausgestattet ist. Insbesondere kann zur Objekterkennung auch eine Bildauswertung erfolgen. Ein anzuzeigender Navigationshinweis wird dann derart innerhalb des angezeigten Umgebungsbild angeordnet, dass er einen Abstand zu einem erkannten Objekt bzw. zu allen erkannten Objekten aufweist. Dazu kann er z.B. seitlich und/oder nach oben oder unten verschoben werden. Auch kann er gegebenenfalls solang verkleinert, d.h. virtuell in den Bildhintergrund geschoben werden, bis das Objektbild und der Navigationshinweis voneinander beabstandet sind. Bei bewegten Objekten wird der Navigationshinweis erforderlichenfalls mehrfach insbesondere kontinuierlich in seiner Position und/oder Größe und/oder Form verändert, um eine Überlagerung mit einem Objektbild zu vermeiden. Grundsätzlich kann der Abstand zwischen einem Objektbild und einem Navigationshinweis auch Null betragen.

Auf diese Weise wird ein Sicherheitscrewinn erzielt, da ein Fahrer, der zur Aufnahme eines Navigationshinweises auf die Anzeigeeinheit schaut, gleichzeitig dem Geschehen auf der Straße vor ihm aufmerksam bleiben kann, da er das angezeigte Videobild der Fahrzeugumgebung ohne Verdeckung der wesentlichen Objekte erkennen kann. Dieser positive Effekt kann durch eine geeignete Anordnung der Anzeigeeinheit, vorzugsweise möglichst dicht am primären Sichtfeld des Fahrers, noch verstärkt werden, da die sogenannte "eyes-off-the-road-time" dann besonders gering ist.

Vorteilhafte Weiterbildungen und Verbesserungen des erfindungsgemäßen Verfahrens sowie der entsprechenden Anordnung ergeben sich aus den abhängigen Ansprüchen.

So ist es besonders vorteilhaft, wenn nur solche Objekte erkannt werden, die verkehrsrelevant sind und sich auf der vor dem Fahrzeug liegenden Fahrbahn befinden und/oder sich neben der vor dem Fahrzeug liegenden Fahrbahn befinden, aber sich auf die Fahrbahn bewegen können. Bei auf der vor dem Fahrzeug liegenden Fahrbahn befindlichen Objekten kann es sich insbesondere um weitere fahrende oder stehende Fahrzeuge, aber auch um Personen oder Hindernisse handeln. Bei Objekten, die sich nicht auf der Fahrbahn befinden ist es von Vorteil, wenn Objekte erkannt werden, die beweglich sind und auf die Fahrbahn gelangen könnten, beispielsweise Fahrzeuge, Personen oder Tiere. Demgegenüber können unbeweglich Objekte, beispielsweise Gebäude oder Bäume auch unberücksichtigt bleiben.

Besonders deutlich zeigen sich die Vorteile des erfindungsgemäßen Verfahrens bzw. der Anordnung dann, wenn der Navigationshinweis als Symbol visualisiert wird, das sich an Verkehrszeichen, insbesondere an die Beschilderung des öffentlichen Straßenverkehrs, anlehnt. Der Fahrer ist an Verkehrszeichen schon aufgrund seiner Fahrausbildung gewöhnt und muss sich nicht auf neue Navigationshinweise einstellen. Diese virtuellen Verkehrszeichen stören gemäß der Erfindung zu keiner Zeit die freie Sicht auf die verkehrsrelevanten Objekte bzw. Objektbilder im angezeigten Bild der Fahrzeugumgebung. Hierdurch ist es möglich, dass der Fahrer auf angenehme und sichere Weise wichtigen Informationen zur Verkehrssituation erfasst.

Das Verfahren kann optional dadurch weiter verbessert werden, dass sich ein Navigationshinweis bei relativ zum Fahrzeug bewegter Fahrzeugumgebung im angezeigten Bild gleichförmig mit der Fahrzeugumgebung bewegt. Auch kann der Navigationshinweis dabei im Umgebungsbild entsprechend vergrößert oder verkleinert werden. Die Bewegung und/oder Vergrößerung oder Verkleinerung des Navigationshinweises kann insbesondere abhängig von der Fahrzeuggeschwindigkeit und der Fahrtrichtung erfolgen. Auf diese Weise wird erreicht, dass die Navigationshinweise wie Verkehrszeichen wahrgenommen werden können, ohne dabei allzu sehr in den Vordergrund zu rücken.

Die Wahrnehmung der Navigationshinweise gleich den realen Verkehrszeichen wird weiter dadurch gefördert, dass bei einer Kurvenfahrt des Fahrzeugs der Navigationshinweis ausgehend von einer Ausgangsposition, die beispielsweise einer Entfernung von 20 Metern vor dem Fahrzeug entsprechen kann, entsprechend dem weiteren Straßenverlauf bzw. Routenverlauf innerhalb der Anzeigeeinheit translatorisch verschoben und/oder gedreht wird, so dass die als Navigationshinweis angezeigten Symbole möglichst realitätsnah dargestellt werden. Bei Pfeilen erfolgt die Verlagerung dabei vorzugsweise derart, dass das Pfeilsymbol tangential an der entsprechend dem weiteren Straßenverlauf bzw. Routenverlauf vorherbestimmten Trajektorie liegt. Der Navigationshinweis kann seitlich verschoben und/oder um einen sich zwischen der Längsmittelachse des Fahrzeugs und der an die Trajektorie approximierten Tangente aufgespannten Winkel gedreht werden. Dabei kann bei einer einfacher auszuführenden Variante lediglich eine Verdrehung des Navigationshinweises erfolgen. Auch können bei einem vorhandenen Fahrspurerkennungssystem die Informationen über den weiteren Verlauf der Fahrspur genutzt werden, um die Navigationssymbole lagerichtig anzuzeigen. Auch kann die Größe von Navigationshinweisen verändert werden, um eine Anpassung an den weiteren Straßenverlauf bzw. Routenverlauf innerhalb der Anzeigeeinheit zu gewährleisten.

Besonders vorteilhaft ist es dabei, wenn zur Vorherbestimmung der Trajektorie bzw. zur Voraussage des weiteren Kurses des Fahrzeugs die Querbeschleunigung des Fahrzeugs, die vorzugsweise aus den ESP-Sensoren erhalten werden kann, und/oder der Lenkwinkel und die Fahrzeuggeschwindigkeit ausgewertet werden.

Gemäß einer besonders bevorzugten Ausführungsform der Erfindung ist vorgesehen, dass das Verfahren im Rahmen eines Nachtsichtsystems ausgeführt wird. Dabei kann vorzugsweise die Anzeige von Navigationshinweisen in der Dunkelheit bei Bedarf einem vorhandenen Nachtsichtbild hinzugeschaltet werden. Bei Tageslicht kann die Bildaufbereitung entsprechend angepasst oder abgeschaltet werden. Die Steuerung der Umschaltung kann entweder manuell oder automatisch, beispielsweise mittels eines Lichtsensors und/oder einer Uhr erfolgen.

Besonders vorteilhaft ist es ferner, wenn die Position- und Größenparameter der Navigationshinweise und/oder die zur Positions- und/oder Größenänderung benötigten Korrekturparameter in einer Speichereinrichtung gespeichert sind, die bei einer Fortbildung der erfindungsgemäßen Anordnung vorgesehen sein kann.

### Zeichnungen

Nachfolgend wird das erfindungsgemäße Verfahren und die Anordnung anhand eines in den Zeichnungen dargestellten Ausführungsbeispiels näher erläutert. Es zeigt
- Figur 1:: ein Aufbauschema einer erfindungsgemäßen Anordnung zur Anzeige von Navigationshinweisen;
- Figur 2:: ein Bild der Anzeigeeinheit mit Objektbild und vier Navigationshinweisen; und
- Figur 3:: ein Schema der Positionsverschiebung eines Navigationshinweises bei Kurvenfahrt.

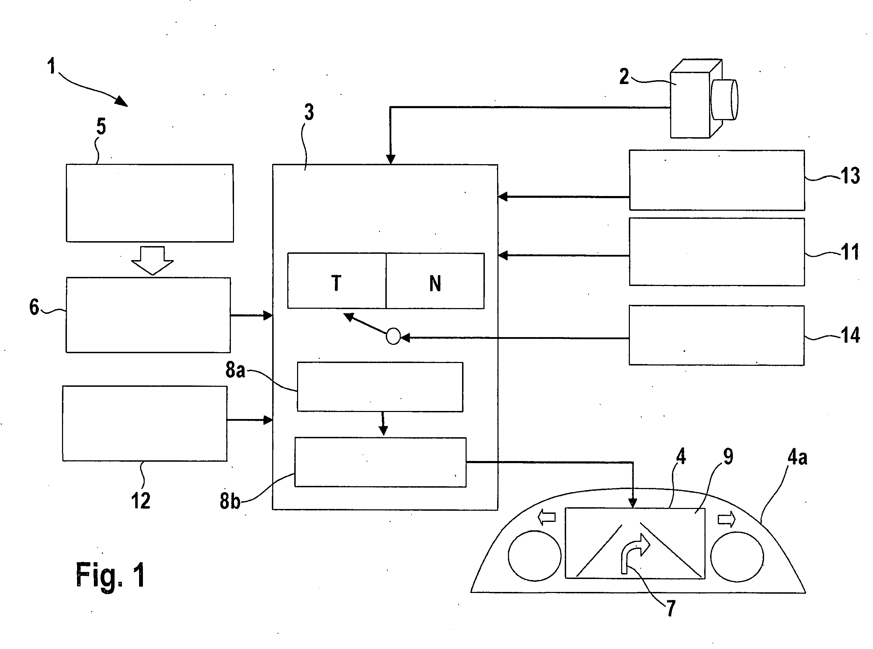

Figur 1 zeigt ein Aufbauschema einer Anordnung 1, mit der das erfindungsgemäße Verfahren bei einem Kraftfahrzeug F im Rahmen eines Nachtsichtsystems ausgerührt werden kann. Das Nachtsichtsystem umfasst eine Kamera 2 in Form einer Nachtsicht- bzw. IR-Kamera, die über ein Nachtsichtsteuergerät 3 mit einer Anzeigeeinheit 4 in Form eines Nachtsicht-Displays verbunden ist. Die Anzeigeeinheit 4 kann alternativ auch unabhängig von einem Nachtsichtsystem ausgeführt sein. Sie kann an beliebigen Positionen im Fahrzeug F angeordnet sein, wobei sie jedoch vorzugsweise im Bereich des primären Sichtfeldes des Fahrers sich befindet und in ein Kombiinstrument 4a integriert sein kann. Die Anordnung 1 umfasst weiterhin ein Navigationssystem mit einer Navigationseinheit 5, welche in an sich bekannter Weise Fahrempfehlungsdaten 6 erzeugt, die als Navigationshinweise 7 in der Anzeigeeinheit 4 angezeigt werden können. Dazu ist die Navigationseinheit 5 ebenfalls mit dem Naehtsichtsteuergerät 3 verbunden. Die Verbindungen können vorzugsweise mittels des im Fahrzeugbau inzwischen standartmäßig verwendeten CAN-Busses (CAN = Controller Area Network) oder mittels eines MOST-Busses (MOST = Media Oriented System Transport) oder auch mittels eines anderen seriellen Feldbussystems ausgeführt sein. Die Anordnung 1 ist prinzipiell dazu geeignet, im Fahrzeug F integrierte Navigationssysteme bzw. Nachtsichtsysteme aufzurüsten.

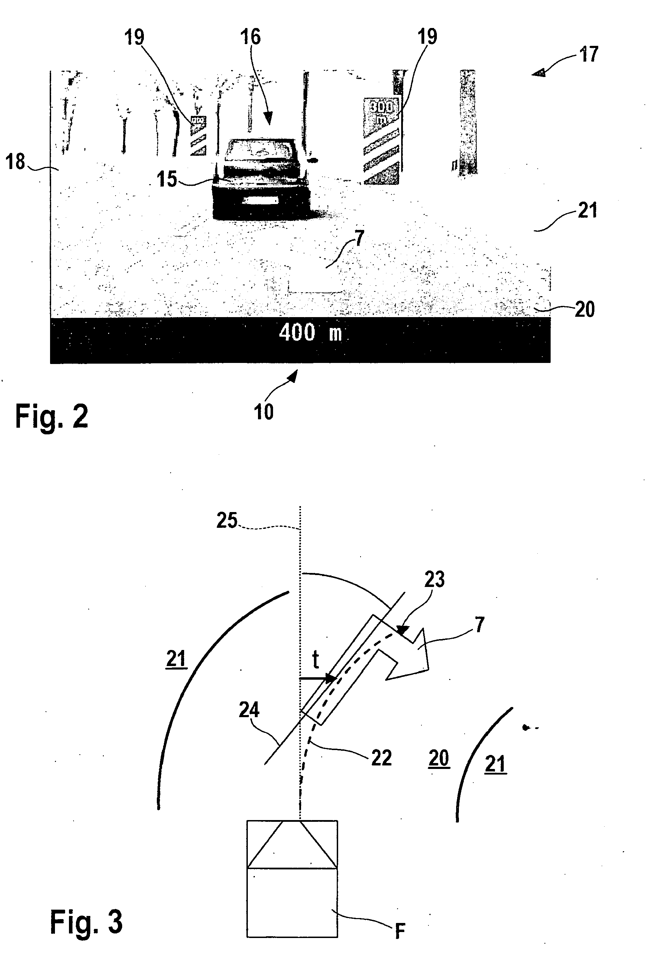

Die Navigationseinheit 5 gibt anhand empfangener Daten, etwa in Form von GPS-Daten, denen Datensätze zur Topografie, Straßenkarten usw. unterlegt sind, Fahrempfehlungsdaten 6 an das Nachtsichtsteuergerät 3. Zusammen mit den von der Kamera 2 erhaltenen Bilddaten der Fahrzeugumgebung gibt das Nachtsichtsteuergerät 3 die mittels einer Kalibrierungseinrichtung 8a und eines Renderers 8b aufbereiteten Daten an die Anzeigeeinheit 4 weiter, so dass dort das Umgebungsbild 9 zusammen mit einem eingeblendeten Navigationshinweis 7 dargestellt werden kann. Beinhalten die Fahrempfehlungsinformationen bzw. Textinformationen 10, z.B. Straßennamen oder Entfernungsangaben, so werden sie bevorzugt im unteren Bereich oder Rand der Anzeigeeinheit 4 ausgegeben (Figur 2), der im übrigen auch für die Tachometeranzeige genutzt werden kann. Entfernungsangaben können alternativ auch als relative Entfernungsbalken angezeigt werden.

Bevorzugt ist die Anzeige des Navigationshinweises 7, z.B. in Form eines Pfeils, perspektivisch an das Umgebungsbild 9 der von der Kamera 2 aufgenommenen Umgebung angepasst. Dadurch soll der Eindruck entstehen, die Navigationshinweise 7 wären vor dem Fahrzeug F auf der Fahrbahnoberfläche angeordnet. Zur Verstärkung dieses Eindrucks kompensiert das Nachtsichtsteuergerät 3 hier die mit einem Sensor 11 gemessenen Nickbewegungen des Fahrzeugs F in dem Umgebungsbild 9. Der Sensor 11 kann ein Nickwinkel- oder Nickratensensor oder ein Besehleunigungssensor, insbesondere aber eine in Figur 1 gezeigte Winkelerfassungseinrichtung in Form eines Sensors 11 zur Ausrichtung der Fahrzeugscheinwerfer sein.

Zur Kompensation des Bildes kann alternativ auch die Fahrbahnoberfläche aus den Bilddaten mittels geeigneter Algorithmen errechnet werden, die ein hier gezeigtes Spurerkennungssystem 12 nutzt. Neben dem Nicken kann selbstverständlich auch das Wanken des Fahrzeugs F kompensiert werden. Im einfachsten Fall kann jedoch aus der statischen Kalibrierung der Kamera 4 eine Straßenoberfläche modelliert werden, ohne das Nicken des Fahrzeugs F zu kompensieren.

Weiterhin werden dem Nachtsichtsteuergerät 3 hier Geschwindigkeitsdaten 13 sowie Lichtsensordaten bzw. Zeitangaben 14 zur Umstellung vom Tagbetrieb T in den Nachtbetrieb N zugeführt. Alternativ kann auch die Bildhelligkeit genutzt werden, um die Darstellung der eingeblendeten Navigationshinweise 7 zu variieren.

Mittels hier nicht gezeigter Mittel für die Objekterkennung (z.B. Nahbereichradar, Fernbereichradar, Lidar) oder mittels geeigneter Bildauswertung für eine Objekterkennung können Objekte 15 erkannt werden, die beispielsweise in Form vorausfahrender Fahrzeuge vorliegen können (Figur 2). Die Objekterkennung gestattet es, die eingeblendeten Navigationshinweise 7 in ihrer virtuellen Entfernung im Umgebungsbild 9 bzw. in ihrer Position auf der Anzeigeeinheit 4 zu verschieben, bis sie nicht mehr auf dem angezeigten Objektbild 16 des erkannten Objekts 15 liegen. Es ist ebenfalls denkbar, die Navigationshinweise 7 in diesem Fall auf herkömmliche Art in einer Bildecke 17 oder an einem Bildrand 18 anzuordnen. Auch können die angezeigten Navigationshinweise 7 in ihrer Größe so verkleinert oder in ihrer Form so verändert bzw. beschnitten werden, dass eine Überschneidung mit dem Objektbild 16 nicht mehr vorliegt.

Vorteilhaft ist es, wenn sich die Navigationshinweise 7 in ihrer Gestaltung an bekannte Verkehrszeichen, insbesondere aber an Verkehrsbeschilderung, anlehnen. So ist es intuitiv möglich, die Bedeutung jedes angezeigten Navigationshinweises 7 zu erfassen, ohne erst seine Bedeutung in einem Betriebshandbuch nachlesen zu müssen. Besonders geeignet sind dabei Leitbaken, Warnbaken, Richtungsbaken in Kurven, Umleitungsschilder, Entfernungstafeln oder Ausfahrtsbaken 19 (Figur 2) als Navigationshinweise 7 für die jeweils entsprechende Verkehrssituation.

Figur 3 zeigt ein Schema zur Prädiktion der Fahrzeug-Trajektorie, d.h. ein Schema zur Positionsverschiebung des Navigationshinweises 7 bei Kurvenfahrt. Um zu verhindern, dass bei Kurvenfahrt Navigationshinweise 7 in Form von Pfeilen statt auf der Fahrbahn 20 auf dem Randstreifen 21, oder Navigationshinweise 7 in Form von Schildern statt auf dem Randstreifen 21 auf der Fahrbahn 20 erscheinen, wird in einem ersten Schritt der künftige Kurs des Fahrzeugs F abgeschätzt. Dieser Kurs kann mit Hilfe von Querbeschleunigungsmessungen oder auch durch die Messung von Lenkwinkel und Fahrzeuggeschwindigkeit errechnet werden. Das Symbol bzw. der Navigationshinweis 7 wird entsprechend dieser Kursabschätzung in einem zweiten Schritt verdreht und verschoben. Die Orientierung des Navigationshinweises 7 liegt dabei tangential an der Trajektorie 22, die das Fahrzeug F beschreibt bzw. voraussichtlich beschreiben wird. Der Navigationshinweis 7 in Form eines Pfeiles liegt damit auf dem vorhergesagten Kurs 23 des Fahrzeugs F, d.h. er folgt dem Verlauf der Fahrbahn 20.

Als Vereinfachung kann auch auf die translatorische Verschiebung des Navigationshinweises 7 verzichtet werden und dieser lediglich entsprechend der Ausrichtung der Tangente 24 an die Trajektorie 22 um einen Winkel α gedreht werden, der sich zwischen der Tangente 24 und der Längsachse 25 des Fahrzeugs F erstreckt. Im übrigen ist es auch möglich, die Trajektorie 22 lediglich aus dem eingeschlagenen Lenkwinkel der Fahrzeuglenkung abzuschätzen. Außerdem können auch die Informationen des vorhandenen Spurerkennungssystems 12 die lagerichtigen Anordnung der Navigationshinweise 7 innerhalb der Fahrbahn 20 oder an deren Randstreifen 21 sicherstellen.

In Figur 2 sind durch entsprechende Berücksichtigung der Trajektorie 22 die Navigationshinweise in der Form von Ausfahrtsbaken 19 in der gewohnten Art und Weise am Randstreifen 21 der Fahrbahn 20 dargestellt. Erfindungsgemäß werden die Ausfahrtsbaken 19 gegebenenfalls in ihrer Position verschoben und/oder in ihrer Größe verändert, um eine Überschneidung mit dem vorausfahrenden Fahrzeug als erkanntem Objekt 15 zu verhindern. So wird es dem Fahrer ermöglicht, sich gefahrfrei auf die angezeigten Navigationshinweise und gleichzeitig auf das vorausfahrende Fahrzeug als weiteres Objekt 15 des Straßenverkehrs zu konzentrierten. Auf diese Weise wird eine allgemein verbesserte Orientierung des Fahrers im Straßenverkehr und damit eine erhöhte Sicherheit erreicht.

## Patentansprüche

1. Verfahren zur Anzeige eines Navigationshinweises (7) eines Navigationssystems in einem Fahrzeug (F), wobei ein Ausschnitt der Fahrzeugumgebung von einer Kamera (2) aufgenommen und als Umgebungsbild (9) mittels einer Anzeigeeinheit (4) angezeigt wird, wobei der Navigationshinweis (7) ebenfalls mittels der Anzeigeeinheit (4) angezeigt wird,
wobei bei aufgenommenen, sich relativ zum Fahrzeug (F) und/oder relativ zur Umgebung bewegenden Objekten (15), die erkannt und im Umgebungsbild (9) als Objektbild (16) angezeigt werden, der Navigationshinweis (7) in seiner Position und/oder Größe und/oder Form derart innerhalb des Umgebungsbilds (9) angeordnet und/oder verschoben und/oder verändert wird, dass keine Überschneidung zwischen dem Objektbild (16) und dem Navigationshinweis (7) vorliegt, **dadurch gekennzeichnet, dass** der Navigationshinweis (7) bei Kurvenfahrt des Fahrzeugs (F) ausgehend von einer Ausgangsposition verschoben und/oder verdreht und/oder verkleinert oder vergrößert wird.

2. Verfahren nach Anspruch 1, **dadurch gekennzeichnet, dass** Objekte (15) erkannt werden, die sich auf der vor dem Fahrzeug (F) liegenden Fahrbahn (20) befinden und/oder die sich neben der vor dem Fahrzeug (F) liegenden Fahrbahn (20) befinden und sich auf die Fahrbahn (20) bewegen können.

3. Verfahren nach Anspruch 1 oder 2, **dadurch gekennzeichnet, dass** der Navigationshinweis (7) als Symbol angezeigt wird, das sich an Verkehrszeichen (19), insbesondere an die Beschilderung des öffentlichen Straßenverkehrs, anlehnt.

4. Verfahren nach mindestens einem der Ansprüche 1 bis 3, **dadurch gekennzeichnet, dass** der Navigationshinweis (7) bei relativ zum Fahrzeug (F) bewegter Fahrzeugumgebung, insbesondere abhängig von Fahrzeuggeschwindigkeit und Fahrtrichtung, im Umgebungsbild (9) gleichförmig mit der Fahizeugumgebung bewegt und/oder vergrößert oder verkleinert wird.

5. Verfahren nach mindestens einem der vorherigen Ansprüche, **dadurch gekennzeichnet, dass** die Positionsänderung des Navigationshinweises (7) vorzugsweise derart erfolgt, dass er tangential an der für das Fahrzeug (F) vorherbestimmten Trajektorie (22) liegt.

6. Verfahren nach Anspruch 5, **dadurch gekennzeichnet, dass** die Trajektorie (22) in Abhängigkeit des Lenkwinkels und/oder der Fahrzeuggeschwindigkeit und/oder der Querbeschleunigung des Fahrzeugs (F) vorherbestimmt wird.

7. Verfahren nach mindestens einem der vorherigen Ansprüche, **dadurch gekennzeichnet, dass** es als Nachtsichtverfahren ausbebildet ist.

8. Anordnung (1) zur Anzeige eines Navigationshinweises (7) eines Navigationssystems für ein Fahrzeug (F), umfassend eine Kamera (2), mittels der ein Ausschnitt der Fahrzeugumgebung aufnehmbar ist, eine Navigationseinheit (5) und eine Anzeigeeinheit (4), mittels der sowohl der Navigationshinweis (7) als auch ein aufgenommener Ausschnitt der Fahrzeugumgebung als Umgebungsbild (9) darstellbar ist, wobei bei einem mittels der Kamera (2) aufnehmbaren, sich relativ zum Fahrzeug (F) und/oder relativ zur Umgebung bewegenden Objekt (15), das mittels einer Objekterkennungseinrichtung erkennbar und in dem Umgebungsbild (9) als Objektbild (16) darstellbar ist, der Navigationshinweis (7) in seiner von der Anordnung (1) errechneten Position und/oder Größe und/oder Form derart positionierbar und/oder verschiebbar und/oder veränderbar ist, dass zwischen dem Objektbild (16) und dem Navigationshinweis (7) stets ein Abstand ist, **dadurch gekennzeichnet, dass** der Navigationshinweis (7) bei Kurvenfahrt des Fahrzeugs (F) ausgehend von einer Ausgangsposition verschoben und/oder verdreht und/oder verkleinert oder vergrößert wird.

9. Anordnung (1) nach Anspruch 8, **dadurch gekennzeichnet, dass** sie eine Winkelerfassungseinrichtung (11) aufweist, durch die ein Nickwinkel und/oder Glerwinkel und/oder Wankwinkel ermittelbar ist, der sich zwischen einer von dem Fahrzeug (F) gebildeten Ebene und einer von der Fahrbahn (20) gebildeten Ebene aufspannt.

10. Anordnung (1) nach Anspruch 9 oder 10, **dadurch gekennzeichnet, dass** die Positionsparameter und die Größenparameter des Navigationshinweises (7) und/oder zur Positions- und/oder Größenänderung benötigte Korrekturparameter in einer Speichereinrichtung gespeichert sind.

## Claims

1. Method for displaying a navigation instruction (7) of a navigation system in a vehicle (F), a section of the vehicle surroundings being recorded by a camera (2) and being displayed as an image (9) of the surroundings by means of a display unit (4), the navigation instruction (7) likewise being displayed by means of the display unit (4) and, given recorded objects (15) which move relative to the vehicle (F) and/or relative to the surroundings and are detected and are displayed in the image (9) of the surroundings as object image (16), the navigation instruction (7) is arranged and/or displaced and/or changed in terms of its position and/or size and/or shape such that there is no overlap between the object image (16) and the navigation instruction (7), **characterized in that** during cornering of the vehicle (F) the navigation instruction (7) is displaced and/or rotated and/or reduced or enlarged starting from an initial position.

2. Method according to Claim 1, **characterized in that** objects (15) are detected which are located on the carriageway (20) in front of the vehicle (F), and/or are located next to the carriageway (20) in front of the vehicle (F), and can move onto the carriageway (20).

3. Method according to Claim 1 or 2, **characterized in that** the navigation instruction (7) is displayed as a symbol which is analogous to traffic signs (19), in particular to the markings for traffic on public roads.

4. Method according to at least one of Claims 1 to 3, **characterized in that** in the image (9) of the surroundings the navigation instruction (7) is moved conformly with the vehicle surroundings and/or enlarged or reduced, with the vehicle surroundings moving relative to the vehicle (F), in particular as a function of vehicle speed and driving direction.

5. Method according to at least one of the preceding claims, **characterized in that** the change in position of the navigation instruction (7) is preferably performed in such a way that it is tangential to the trajectory (22) predetermined for the vehicle (F).

6. Method according to Claim 5, **characterized in that** the trajectory (22) is predefined as a function of the steering angle and/or the vehicle speed and/or the transverse acceleration of the vehicle (F).

7. Method according to at least one of the preceding claims, **characterized in that** it is designed as a night vision method.

8. Arrangement (1) for displaying a navigation instruction (7) of a navigation system for a vehicle (F), comprising a camera (2) by means of which a section of the vehicle surroundings can be recorded, a navigation unit (5) and a display unit (4) by means of which both the navigation instruction (7) and a recorded section of the vehicle surroundings can be represented as an image (9) of the surroundings and, given an object (15) which can be recorded by means of the camera (2) and moves relative to the vehicle (F) and/or relative to the surroundings and which can be detected by means of an object detection device and be represented in the image (9) of the surroundings as object image (16), the navigation instruction (7) can be positioned and/or displaced and/or changed in terms of its position calculated by the arrangement (1), and/or size and/or shape in such a way that there is always a spacing between the object image (16) and the navigation instruction (7), **characterized in that** during cornering of the vehicle (F) the navigation instruction (7) is displaced and/or rotated and/or reduced or enlarged starting from an initial position.

9. Arrangement (1) according to Claim 8, **characterized in that** it has an angle detection device (11) which can be used to determine a pitch angle and/or yaw angle and/or swaying angle which is defined by a plane formed by the vehicle (F) and a plane formed by the carriageway (20).

10. Arrangement (1) according to Claim 9 or 10, **characterized in that** the position parameters and the size parameters of the navigation instruction (7) and/or correction parameters required to change position and/or size are stored in a memory device.

## Revendications

1. Procédé d'affichage d'une indication de navigation (7) par un système de navigation d'un véhicule (F),
une partie de l'environnement du véhicule étant enregistrée par une caméra (2) et étant affichée comme image (9) de l'environnement au moyen d'une unité d'affichage (4),
l'indication de navigation (7) étant également affichée au moyen de l'unité d'affichage (4),
la position, et/ou la taille et/ou la forme de l'indication de navigation (7) étant disposées et/ou déplacées et/ou modifiées dans l'image (9) de l'environnement lorsque des objets (15) enregistrés et se déplaçant par rapport au véhicule (F) et/ou par rapport à l'environnement sont détectés et affichés comme image (16) d'objets dans l'image (9) de l'environnement de telle sorte que l'image (16) des objets et l'indication de navigation (7) ne se superposent pas,
**caractérisé en ce que**
l'indication de navigation (7) est déplacée et/ou tournée et/ou réduite ou agrandie à partir de sa position initiale lorsque le véhicule (F) se déplace en virage.

2. Procédé selon la revendication 1, **caractérisé en ce que** des objets (15) situés sur la bande de circulation (20) en avant du véhicule (F) et/ou situés à côté de la bande de circulation (20) en avant du véhicule (F) et qui peuvent se déplacer sur la bande de circulation (20) sont détectés.

3. Procédé selon les revendications 1 ou 2, **caractérisé en ce que** l'indication de navigation (7) est affichée sous la forme d'un symbole qui ressemble aux panneaux de signalisation (19) et en particulier à la signalisation du trafic sur la voie publique.

4. Procédé selon au moins l'une des revendications 1 à 3, **caractérisé en ce que** lorsque l'environnement du véhicule se déplace par rapport au véhicule (F), en particulier en fonction de la vitesse du véhicule et de la direction de son déplacement, l'indication de navigation (7) est déplacée et/ou agrandie ou réduite dans l'image (9) de l'environnement de manière identique à l'environnement du véhicule.

5. Procédé selon au moins l'une des revendications précédentes, **caractérisé en ce que** la modification de la position de l'indication de navigation (7) est effectuée de préférence de manière à être tangente à la trajectoire (22) préalablement déterminée du véhicule (F).

6. Procédé selon la revendication 5, **caractérisé en ce que** la trajectoire (22) est prédéterminée en fonction de l'angle de direction, et/ou de la vitesse du véhicule et/ou de l'accélération transversale du véhicule (F).

7. Procédé selon au moins l'une des revendications précédentes, **caractérisé en ce qu'**il est configuré comme procédé de vision nocturne.

8. Ensemble (1) d'affichage d'une indication de navigation (7) par un système de navigation d'un véhicule (F), l'ensemble comprenant
une caméra (2) au moyen de laquelle une partie de l'environnement du véhicule peut être enregistrée,
une unité de navigation (5) et une unité d'affichage (4) au moyen de laquelle l'indication de navigation (7) ainsi qu'une partie enregistrée de l'environnement du véhicule peuvent être représentées en tant qu'image (9) de l'environnement,
la position et/ou la taille et/ou la forme de l'indication de navigation (7) calculées par l'ensemble (1) pouvant être disposées et/ou déplacées et/ou modifiées de telle sorte qu'il existe toujours une distance entre l'image (16) d'un objet et l'indication de navigation (7) lorsqu'un objet (15) qui peut être enregistré au moyen de la caméra (2) se déplace par rapport au véhicule (F) et/ou par rapport à l'environnement et peut être détecté au moyen d'un dispositif de détection d'objets et être représenté comme image (16) d'un objet dans l'image (9) de l'environnement,
**caractérisé en ce que**
lorsque le véhicule (F) se déplace en virage, l'indication de navigation (7) est déplacée et/ou tournée et/ou réduite ou agrandie par rapport à une position initiale.

9. Ensemble (1) selon la revendication 8, **caractérisé en ce qu'**il présente un dispositif (11) de saisie d'angle qui permet de déterminer un angle de tangage et/ou un angle de lacet et/ou un angle de roulis formés entre un plan sous-tendu par le véhicule (F) et un plan sous-tendu par la bande de circulation (20).

10. Ensemble (1) selon les revendications 9 ou 10, **caractérisé en ce que** les paramètres de position, les paramètres de taille de l'indication de navigation (7) et/ou les paramètres de correction nécessaires pour modifier la position et/ou la taille de cette indication de navigation sont conservés en mémoire dans un dispositif de mémoire.
